(19) Europäisches Patentamt
European Patent Office
Office européen des brevets

(11) **EP 4 391 550 A1**

(12) **EUROPEAN PATENT APPLICATION**

(43) Date of publication:
**26.06.2024 Bulletin 2024/26**

(21) Application number: **23217393.0**

(22) Date of filing: **18.12.2023**

(51) International Patent Classification (IPC):
$H04N\ 21/218^{(2011.01)}$    $H04N\ 19/146^{(2014.01)}$
$H04N\ 21/2343^{(2011.01)}$    $H04N\ 21/43^{(2011.01)}$
$H04N\ 21/81^{(2011.01)}$    $H04N\ 21/845^{(2011.01)}$
$H04N\ 19/154^{(2014.01)}$    $H04N\ 19/167^{(2014.01)}$
$H04N\ 19/174^{(2014.01)}$    $H04N\ 19/597^{(2014.01)}$

(52) Cooperative Patent Classification (CPC):
**H04N 21/21805; H04N 19/154; H04N 19/167;
H04N 19/174; H04N 19/597; H04N 21/23439;
H04N 21/43072; H04N 21/816; H04N 21/8456**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 EP 22216467**

(71) Applicants:
• **Koninklijke KPN N.V.
3072 AP Rotterdam (NL)**

• **Nederlandse Organisatie voor
toegepast-natuurwetenschappelijk Onderzoek
TNO
2595 DA 's-Gravenhage (NL)**

(72) Inventors:
• **Brandt, Aschwin Steven Reinier
2511 EZ Den Haag (NL)**
• **Potetsianakis, Emmanouil
2563 TZ Den Haag (NL)**
• **Alexiou, Evangelos
1018 LG Amsterdam (NL)**

(74) Representative: **Wuyts, Koenraad Maria
Koninklijke KPN N.V.
Wilhelminakade 123
3072 AP Rotterdam (NL)**

(54) **PROCESSING CONTENT FOR EXTENDED REALITY APPLICATIONS**

(57) Methods and systems of processing content by a client are described wherein the method includes: receiving scene information defining two or more viewpoints in a scene, each of the two or more viewpoints being associated with an area in the scene and with a plurality of quality versions of video content, the video content defining one or more views in the scene associated with a viewpoint; receiving position information associated with a user of a playback device, the position information defining at least a user position and, optionally, a viewing direction of the user in the scene; if the user position is outside the areas associated with the two or more viewpoints, then selecting first content of a first quality associated with a first viewpoint and second content of a second quality associated with a second viewpoint in the scene based on the position information and the scene information; sending a request to a server system, the request comprising information about the first content of the first quality and the second content of the second quality and, optionally, the position and/or viewing direction of the user in the scene; and, receiving, in response to the request, video frames comprising the first and second content for generating synthesized content on the basis of the first and second content, wherein the synthesized content is associated with the position of the user in the scene; or, receiving video frames comprising synthesized content associated with the position of the user in the scene, wherein the synthesized content is synthesized based on the first and second content.

FIG. 2

EP 4 391 550 A1

## Description

Technical field

The invention relates to processing content for extended reality applications, and, in particular, though not exclusively, to methods and systems for processing content, a client and a server for processing content, and a computer program product for executing such methods.

Background

Over the past years, interest in advanced video experiences such as augmented reality, mixed reality, and virtual reality (together referred to extended reality) has seen a sharp increase. Capturing or generating content for extended reality applications includes recording or generating different types of contents including omnidirectional content, a volumetric content such as point clouds, meshes with textures, light fields and neural radiance fields.

These advanced content creation and content processing technologies allow a user of an extended reality playback device to consume content with a higher degree of freedom than conventional 2D content. For example, 360-degree video may offer a user experience based on three degrees freedom (3DoF). Similarly, volumetric data offer a user experience based on six degrees of freedom (6DoF). However, usage of extended reality applications, which requires recoding or synthesizing multi-directional content, referred to as views, for different spatial positions will result in an exponential increase in resource usage, such as storage capacity and bandwidth consumption, to provide an immersive experience to the user.

WO2021130355 describes a system for streaming content for extended reality applications, which includes the use of modelled space that comprises so-called pre-rendered view areas (PRVAs) and synthesizing view areas (SVAs). PRVAs define areas in the space that are associated with pre-rendered content and SVAs are areas for which content can be synthesized based on pre-rendered content of one or more PRVAs. A manifest file may be used to provide a client of the playback device information about the availability of PRVAs, SVAs and resource locators for retrieving content associated with the PRVAs. This way, based on the position of the user in the modelled space, either pre-rendered content associated with a PRVA can be displayed directly by the playback device or content can be synthesized based on pre-rendered content of two or more PRVAs before displayed by the playback device.

Even though this scheme can provide significant benefits in terms of storage and bandwidth savings, it still requires a plethora of views that need to be available for the client of the playback device at a given time. This is especially relevant for extended reality applications with 6DoF capabilities which may be implemented in an adaptive streaming scheme. In such scenario, the quality of the immersive experience depends on the number of PRVAs, wherein each PRVA is associated with content segments that are available in plurality of quality versions. In that case, a high density of PRVAs is required resulting in significant bandwidth and storage cost.

Hence, from the above, it follows there is need in the art for improved content processing and streaming schemes for extended reality applications.

Summary

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the invention may relate to a method of processing content by a client. The method may comprise receiving scene information defining two or more viewpoints in a scene, each of the two or more viewpoints being associated with an area in the scene and with a plurality of quality versions of content, the content defining one or more views in the scene associated with a viewpoint. The method may also comprise receiving position information associated with a user of a display device, the position information defining at least a user position. The method may further comprise selecting first content of a first quality associated with a first viewpoint and second content of a second quality associated with a second viewpoint in the scene based on the position information and the scene information. The method may further comprise sending a request to a server system, wherein the request comprises information about the first content of the first quality and the second content of the second quality. In an embodiment, the method may further include receiving, in response to the request, video frames comprising first and second content for generating synthesized content, e.g. a synthesized view, on the basis of the first and second content, wherein the synthesized content is associated with the position of the user in the scene. In another embodiment, the method may include receiving video frames comprising synthesized content, e.g. a synthesized view, associated with the position of the user in the scene, wherein the synthesized content is synthesized based on the first and second content.

In an embodiment, the method may also comprise receiving a viewing direction of the user in the scene. In an embodiment, the first and second content may be selected if the user position is outside the areas associated with the two or more viewpoints. In another embodiment, the request may further comprise, the position of the user in the scene and/or the viewing direction of the user in the scene.

Thus, views for a user of a playback device at a position in a modelled scene may be synthesized based on content streams associated with different viewing areas (VAs), wherein the quality of a content stream of a first viewing area may be different from the quality of a content stream of a second viewing area. Content of two or more viewing areas and of different qualities may be used for the synthesis. A view associated with a user position outside the viewing areas can be synthesized based on a first stream of a first quality associated with a first VA (which may for example be located closest to the user) and a second stream of a second quality that is lower than the first quality associated with a second VA (which may for example be located at a distance that is larger than the distance between the user and the second VA). This way during streaming the bandwidth can be substantially reduced. Instead of viewing areas (i.e. two dimensional areas in the scene) viewing volumes (i.e. three dimensional volumes in the scene) may be used to define volumes in the modelled space that are associated with content.

It is noted that the present disclosure generally refers to a scene when capturing a real-world image by cameras or defining a scene by a computer or a combination thereof. The result of the captured or computer-generated scene is a video scene that can be watched by a user using a playback device, i.e. a video processing device.

Further, the user position may be a real position (wherein the user, for example, wears an AR or VR device and is in a certain position) or a virtual position (e.g. based on a controller input, e.g. a game or mouse controller).

In an embodiment, the first content and second content may be selected based on the distance between the user position and each of the two or more viewpoints. In another embodiment, the first content and second content may be selected based on the orientation and/or viewing direction of the user in the scene. For example, if two or more VAs are in the field of view (the viewing direction) of the user, these two or more VAs may be used to combine video frames to synthesize new video frames associated with a new view for playback by the playback device at the position of the user.

In an embodiment, the first quality of the first content and the second quality of the second content are determined based on a distance between the user position and the first viewpoint and between the user position and the second viewpoint. In an embodiment, the first and second quality decreases when the distance between the user position and the first and second viewpoint respectively increases.

Here, the quality of content may be determined based on the bitrate and/or the resolution of video data transmitted to a client device. Hence, the quality of the content may be selected based on the distance between the location of VAs and the position of the user of the playback device in the scene and/or the viewing direction of the user in the scene. When using synthesis algorithms based on interpolation, such as alpha-blending or the like, the embodiments may provide substantial bandwidth gain without no or negligible degradation of the quality of the synthesized views.

Hence, content associated with the different VAs associated with different viewpoints in the scene may be projected in one frame. For example, omnidirectional or volumetric content of different VAs may be projected based on e.g. an equirectangular, cube map, or other projection in composite (tiled or mosaic) video frames. Hence, each video frame may include different tiles associated with content of VAs. A video frame comprising two or more projections of pre-rendered content of different VAs may be referred to as a multi-VA frame. A sequence of multi-VA frames may be stored based on any known format that is used in content streaming, e.g. an MPEG transport stream. The sequence of multi-VA frames may be referred to as a multi-VA frame collection (MVFC). MVFCs allow improved user experience and reduced latency associated with switching between PRVAs. Further, streaming the content associated with different VAs as an MVFC eliminates the need for multiple decoders on the client side. In an embodiment, the content associated with the different VAs in an MVFC may be of different quality versions. This way, a bandwidth gain can be achieved without any effect or a minimal effect on the quality of the views that are synthesized based on these VAs of different qualities.

In an embodiment, the video frames comprising first and second content may be implemented as composite frames, each composite frame including at least a first video tile comprising the first content and a second video tile comprising the second content, the first video tile representing a view of the scene associated with the first viewpoint and the second tile representing a view of the scene associated with the second viewpoint.

In an embodiment, the method may further comprise synthesizing the frames comprising first and second content based on the scene information, the position of the user in the scene and based on the position of the first and second viewpoint in the scene.

In an embodiment, the first and second content may be projected into the video frames based on a predetermined projection scheme, for example an equirectangular projection, a cube-map projection, a pyramid projection or an equi-angular cubemap projection, pyramid projection.

In an embodiment, at least part of the scene information is signaled to a client based on a manifest file, preferably a media presentation description (MPD).

In an embodiment, the scene information may include one or more of: area identifier for identifying an area in the scene associated with a viewpoint, viewpoint position information identifying a position of a viewpoint in the scene, information about dimensions of an areas associated with a viewpoint, one or more resource locators for identifying content associated with a viewpoint, a quality metric for defining a quality of content associated with a viewpoint.

In an embodiment, at least part of the scene information may be signaled to a client based on a bitstream, preferably SEI messages

In an embodiment, the first and/or second content may include volumetric data, omnidirectional data, pre-rendered computer-generated content and/or camera-generated content, e.g. a 360 camera. In an embodiment, the camera-generated content may be real-time camera generated content. The content may be video segments that have been captured before the scene by cameras located at positions defined by viewpoints or that have been generated from a computer-generated 3D scene, e.g. using a game engine such as Unity, a 3D scene description such as Univeral Scene Description (USD) or OpenSceneGraphe. Further, the content may be generated based on machine learning techniques such as representations of 3D content, such as neural radiance fields, that have been generated by feeding 2D images and viewing direction to a trained neural network.

In an embodiment, the synthesis of the view may be performed by a client device, an edge server or a cloud server; and/or, wherein the content and/or the scene information is stored on a server system

In an embodiment, the client device may be implemented as an HTTP adaptive streaming client apparatus, such as a MPEG DASH client apparatus, and wherein the manifest file defines a media presentation description MPD, wherein MPD includes

In a further aspect, the embodiments may relate to a method of processing content by a server, wherein the method may comprise one or more of the following steps: receiving or determining scene information defining two or more viewpoints in a scene, each of the two or more viewpoints being associated with an area in the scene and with a plurality of quality versions of content, the content defining a view in the scene associated with a viewpoint; receiving position information associated with a user of a playback device, the position information defining at least a user position and, optionally, a viewing direction of the user in the scene; if the user position is outside the areas associated with the two or more viewpoints, then selecting first content of a first quality associated with a first viewpoint and second content of a second quality associated with a second viewpoint in the scene on the basis of the position information; transmitting video frames comprising the first and second content for generating synthesized content on the basis of the first and second content, wherein the synthesized content is associated with the position of the user in the scene; or, transmitting video frames comprising synthesized content associated with the position of the user in the scene, wherein the synthesized content is synthesized based on the first and second content.

In a further aspect, the embodiments may relate to a client apparatus for processing content comprising: a computer readable storage medium having computer readable program code embodied therewith, and a processor, preferably a microprocessor, coupled to the computer readable storage medium, wherein responsive to executing the computer readable program code, the processor is configured to perform executable operations, wherein the executable operations may include one or more of the following operations: receiving scene information defining two or more viewpoints in a scene, each of the two or more viewpoints being associated with an area in the scene and with a plurality of quality versions of video content, the video content defining one or more views in the scene associated with a viewpoint; receiving position information associated with a user of a playback device, the position information defining at least a user position and, optionally, a viewing direction of the user in the scene; if the user position is outside the areas associated with the two or more viewpoints, then selecting first content of a first quality associated with a first viewpoint and second content of a second quality associated with a second viewpoint in the scene based on the position information and the scene information; sending a request to a server system, the request comprising information about the first content of the first quality and the second content of the second quality and, optionally, the position and/or viewing direction of the user in the scene; and, receiving, in response to the request, video frames comprising the first and second content for generating synthesized content on the basis of the first and second content, wherein the synthesized content is associated with the position of the user in the scene; or, receiving video frames comprising synthesized content associated with the position of the user in the scene, wherein the synthesized content is synthesized based on the first and second content.

In a further aspect, the invention may relate to a server apparatus for processing pre-rendered content comprising: a computer readable storage medium having computer readable program code embodied therewith, and a processor, preferably a microprocessor, coupled to the computer readable storage medium, wherein responsive to executing the computer readable program code, the processor is configured to perform executable operations, wherein the executable operations may include one or more of the following operations: receiving or determining scene information defining two or more viewpoints in a scene, each of the two or more viewpoints being associated with an area in the scene and with a plurality of quality versions of content, the content defining a view in the scene associated with a viewpoint; receiving position information associated with a user of a playback device, the position information defining at least a user position and, optionally, a viewing direction of the user in the scene; if the user position is outside the areas associated with the two or more viewpoints, then selecting first content of a first quality associated with a first viewpoint and second content of a second quality associated with a second viewpoint in the scene on the basis of the position information; transmitting video frames comprising the first and second content for generating synthesized content on the basis of the first and second content, wherein the synthesized content is associated with the position of the user in the scene; or, transmitting video frames comprising synthesized content associated with the position of the user in the scene, wherein the synthesized content is synthesized based on the first and second content.

One embodiment of the invention comprises a method of processing content by a client, the method comprising:

receiving scene information defining two or more viewpoints in a scene, wherein the scene is a modelled 3D space, each of the two or more viewpoints being associated with an area in the scene and with a plurality of quality versions of video content, the video content defining one or more views in the scene associated with a viewpoint, wherein the viewpoint is a position in the scene for which the video content is pre-rendered;

receiving position information associated with a user of a playback device, the position information defining at least a user position and, optionally, a viewing direction of the user in the scene;

if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene based on the position information and the scene information, wherein the second content is pre-rendered video content for the second viewpoint;

sending a request to a server system, the request comprising information about the first content of the first quality and the second content of the second quality, wherein the first quality is different from the second quality, and, optionally, the position and/or viewing direction of the user in the scene; and,

receiving, in response to the request, video frames comprising the first and second content for generating synthesized content on the basis of the first and second content, wherein the synthesized content is associated with the user position in the scene, the syntheized content providing a view for the user position in the scene; or, receiving video frames comprising synthesized content associated with the user position in the scene,

wherein the synthesized content is synthesized based on the first and second content, the synthesized content providing a view for the user position in the scene.

Another embodiment of the invention comprises a method of processing content by a server, the method comprising:

receiving or determining scene information defining two or more viewpoints in a scene, wherein the scene is a modelled 3D space, each of the two or more viewpoints being associated with an area in the scene and with a plurality of quality versions of content, the content defining a view in the scene associated with a viewpoint, wherein the viewpoint is a position in the scene for which the video content is pre-rendered;

receiving position information associated with a user of a playback device, the position information defining at least a user position and, optionally, a viewing direction of the user in the scene;

if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene, wherein the second content is pre-rendered video content for the second viewpoint, on the basis of the position information, wherein the first quality is different from the second quality;

transmitting video frames comprising the first and second content for generating synthesized content on the basis of the first and second content, wherein the synthesized content is associated with the user position in the scene, the synthesized content providing a view for the user position in the scene; or, transmitting video frames comprising synthesized content associated with the user position in the scene, wherein the synthesized content is synthesized based on the first and second content, the synthesized content providing a view for the user position in the scene.

Yet another embodiment of the invention comprises a client apparatus for processing content comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:

receiving scene information defining two or more viewpoints in a scene, wherein the scene is a modelled 3D space, each of the two or more viewpoints being associated with an area in the scene and with a plurality of quality versions of video content, the video content defining one or more views in the scene associated with a viewpoint, wherein the viewpoint is a position in the scene for which the video content is pre-rendered;

receiving position information associated with a user of a playback device, the position information defining at least a user position and, optionally, a viewing direction of the user, in the scene;

if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene, wherein the second content is pre-rendered video content for the second viewpoint, based on the position information and the scene information, wherein the first quality is different from the second quality;

sending a request to a server system, the request comprising information about the first content of the first quality and the second content of the second quality and, optionally, the user position and/or viewing direction of the user in the scene; and,

receiving, in response to the request, video frames comprising the first and second content for generating synthesized content on the basis of the first and second content, wherein the synthesized content is associated with the user position in the scene, the synthesized content providing a view for the user position in the scene; or, receiving video frames comprising synthesized content associated with the user position in the scene, wherein the synthesized content is synthesized based on the first and second content, the synthesized content providing a view for the user position in the scene.

Yet another embodiment of the invention comprises server apparatus for processing pre-rendered content comprising:

a computer readable storage medium having computer readable program code embodied therewith, and a processor, preferably a microprocessor, coupled to the computer readable storage medium, wherein responsive to executing the computer readable program code, the processor is configured to perform executable operations comprising:

receiving or determining scene information defining two or more viewpoints in a scene, wherein the scene is a modelled 3D space, each of the two or more viewpoints being associated with an area in the scene and with a plurality of quality versions of content, the content defining a view in the scene associated with a viewpoint, wherein the viewpoint is a position in the scene for which the video content is pre-rendered;

receiving position information associated with a user of a playback device, the position information defining at least a user position and, optionally, a viewing direction of the user, in the scene;

if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene, wherein the second content is pre-rendered video content for the second viewpoint, on the basis of the position information, wherein the first quality is different from the second quality;

transmitting video frames comprising the first and second content for generating synthesized content on the basis of the first and second content, wherein the synthesized content is associated with the user position in the scene, the synthesized content providing a view for the user position in the scene; or, transmitting video frames comprising synthesized content associated with the user position in the scene, wherein the synthesized content is synthesized based on the first and second content, the synthesized content providing a view for the user position in the scene.

The embodiments may also relate to a client and a server configured to perform any of the method steps above.

The embodiments further relate to a computer program product comprising software code portions configured for, when run in the memory of a computer, executing the method steps according to any of process steps described above.

The embodiments will be further illustrated with reference to the attached drawings, which schematically will show embodiments. It will be understood that the invention is not in any way restricted to these specific embodiments.

Brief description of the drawings

Fig. 1 illustrates a model of a space for processing content for an extended reality application;

Fig. 2 illustrates a model of a space for processing content for an extended reality application according an embodiment;

**Fig. 3** depicts a model of a space for processing content for an extended reality application according another embodiment;

**Fig. 4** depicts a system and a process for content for an extended reality application according to an embodiment;

**Fig. 5** depicts flow diagram of a method of processing content according to an embodiment;

**Fig. 6** depicts an example of a manifest file for signaling content and associated parameters according to an embodiment;

**Fig. 7** depicts an example of a manifest file for signaling content and associated parameters according to another embodiment;

**Fig. 8** depicts a method for selecting a representation of a viewing area according to an embodiment;

**Fig. 9** depicts a method of determining a resolution for a viewing area according to an embodiment;

**Fig. 10A-10C** show a comparison of cropped parts of synthesized views;

**Fig. 11** depicts a schematic of a server system configured to process according to an embodiment;

**Fig. 12** is a block diagram illustrating an exemplary data processing system that may be used in as described in this disclosure.

Description of the embodiments

The embodiments in this disclosure relate to content processing for extended reality applications. At least part of the embodiments relate to processing of content based on a plurality of resolution versions of content that are associated with different positions in a modelled space (a modelled scene) of an extended reality application. Here, content may relate to computer-generated content which is generated based on a model. Such content may be rendered offline using special computer (typically referred to as pre-rendered content) or real-time. The rendering process may be executed by a powerful rendering engine, e.g. running on a server or in the cloud, which may compute video data that can be stored on a server or in the cloud for later use or directly displayed by a playback device.

Typical content types for extended applications may comprise omnidirectional or volumetric content, which is stored on a server system or the cloud. Alternatively, and/or in addition, the content may include 2D video data or 2D video data that includes depth information. In that case, based on this 2D video data, volumetric or omnidirectional video data may be synthesized using for example machine or deep learning-based models for generating representations of 3D content, such as neural radiance fields.

The content may be associated with different positions and orientations of a user of a playback device in a scene. Typical play back devices for such extended reality applications, may include a head mounted display or augmented reality glasses. This way, when the user is moving through the (virtual) space, sensor information of the playback device (e.g. position, pose and viewing direction of the user), may be used to select content which may be sent, e.g. streamed, to the playback device. In the modelled space positions may be defined for which pre-rendered content of the scene in the modelled space is created e.g. in the form of omnidirectional or volumetric data or conventional 2D which can be used based on machine learning-based view synthesis. The position in the modelled space for which the content is rendered may be referred to as a viewpoint and the content that is prepared for playback at a certain viewpoint may be referred to - in short - as a view.

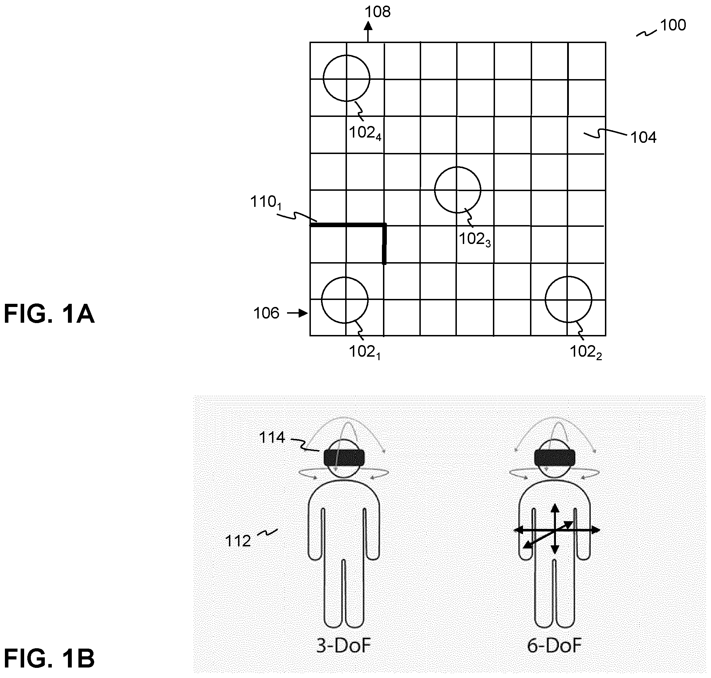

Content for an extended reality playback device is available in the form of pre-rendered omnidirectional or volumetric video data associated with a number of different positions, viewpoints, in a modelled 3D space representing a scene. The 3D space may be modelled so that coordinates can be attributed to different parts of the scene. The scene may include viewpoints, i.e. a location in the 3D space for which the content is generated, and an area around each of the viewpoint, so that in the area a playback device can use the pre-rendered content of the viewpoint to view part of the scene. **Fig. 1A** depicts an example of a top view of the modelled space which may include a grid 100 that comprises areas defining view areas $102_{1-4}$ (VAs) and areas (outside the VAs) defining synthesizing view areas (SVAs) **104**. VAs define areas around viewpoints in the space for which content is available, e.g. content stored on a server or in the cloud or content generated real-time by a camera system, e.g. a 360 camera located at a viewpoint. When the user is in one of the VAs, content may be streamed to the playback device of the user. When the user is located outside the Vas, in one of the SVAs, content of two or more VAs may be streamed to the playback device which is configured to synthesize a view based on the received content.

Information about the scene, hereafter referred to as scene information (e.g. in the form of one or more manifest files, streaming descriptors and/or scene descriptors), may comprise information about the modelled 3D space **100** (e.g., grid dimensions and coordinates of entry points **106** and exit points **108,** borders $110_{1,2}$ etc.), the synthesizing model (e.g., depth map, metadata), and areas associated with pre-rendered content (e.g. VAs). The scene information may further include references, e.g. resource locators such as URLs, to stored pre-rendered content associated with the VAs. The pre-rendered content may be created based on pictures that are captured by camera's positioned at the viewpoints of the PRVAs and/or content that is generated by a computer.

As shown in **Fig. 1B,** based on the scene information and information about the position of the user **112** in the scene, a client in the extended reality playback device **114** is configured to navigate a user through the scene and request, depending on the position of the user, pre-rendered content associated with one or more VAs, which is either displayed directly, or processed by a synthesis module before playback. These schemes may for example be used to playback of 360-degree video providing a 3DoF user experience or playback of volumetric data providing a user a 6DoF user experience. This way, only a limited amount of VAs associated with pre-rendered content need to be available for the streaming client, since content associated with SVAs can be synthesized based on content of the VAs.

In this approach, a synthesis module in the playback device (or any other VA consumption mechanism) will require content of two or more VAs as input in case a user of the playback device is located between the locations of two or more VAs. Further, bandwidth adaptation schemes, such as HTTP adaptive streaming schemes wherein content is divided in segments or chunks, may be used for streaming the content to the client. These schemes require that for each VA segments in multiple qualities should be available. The storage required to store all segments may be enormous.

To address above-mentioned problems, the embodiments in this disclosure include methods and system for processing content wherein views for an extended reality playback device may be synthesized based on pre-rendered content of different PRVAs, wherein the content is of different qualities is available. Here, the quality of the content may be defined in terms of bitrate or resolution. VAs may be selected the spot and the content prepared for a user may be stored, which amounts to only a fraction of the total number of possibilities, while exploiting that users usually behave in a similar way. Thus, for already stored content from one user is very likely to be used again for another user.

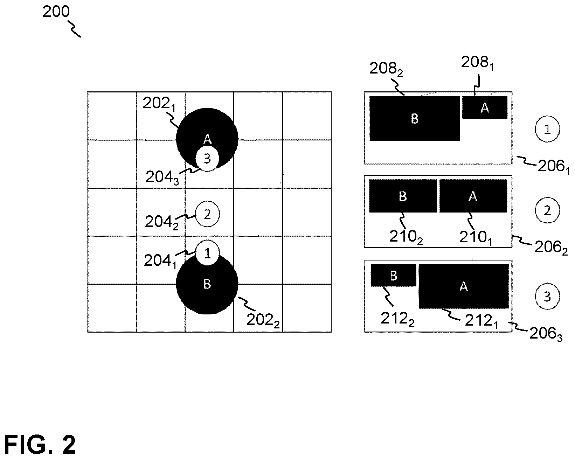

**Fig. 2.** illustrates a scheme for processing content according to an embodiment. The content may be associated with a modelled space **200** comprising a plurality of areas (in this case VAs **202$_{1,2}$**) associated with content, for example projected content, such as equirectangular projections of omnidirectional or volumetric content. In some embodiment, the content may also be stored as 2D content, which can be used in this embodiment, the pre-rendered content may be available in multiple quality versions, e.g. different bitrate or resolution versions. For example, the pre-rendered content may be available in high-, medium- and low-quality. Based on the above-described distance-based quality selection scheme, so-called multiple-VA-frame collections (MVFCs) may be created based on the user position and the positions of the VAs, e.g. measured from the viewpoint of a RA. For example, as shown in the figure, depending on the distance between the location of different VAs, in this example a first VA **202$_1$** and second VA **202$_2$**, and different user positions **204$_{1-3}$**, different MVFCs **206$_{1-3}$** may be created and stored.

For example, at a first user position **204,** close to the second VA, a first MVFC **206$_1$** may be created including frames comprising low-quality projected content **208$_1$** associated with the first VA and high-quality projected content **208$_2$** associated with the second VA. Similarly, at a second user position **204$_2$** a second MVFC **206$_2$** may be created that includes frames comprising medium quality projected content **210$_1$** associated with the first VA and medium quality projected content **210$_2$** associated with the second VA. Further, a third MVFC **206$_3$** associated with the third user position **204$_3$** may include frames comprising high-quality projected content **212,** associated with the first VA and low-quality projected content **212$_2$** associated with the second VA respectively.

Thus, views may be synthesized based on content of different VAs, wherein the quality of a content stream of one of the different VAs may be selected based on the distance between the position of a VA and the position of the user of the playback device in the scene. In some embodiments, when selecting the quality of a content stream the orientation of the user in the scene may be considered as well. Here, the viewpoint associated with a VA may be selected as the position of the VA. This way, a view associated with a user certain position can be synthesized based on a first stream of a first quality associated with a first VA (which may be located closest to the user) and a second stream of a second quality that is lower than the first quality associated with a second VA (which may be located at a distance that is larger than the distance between the user and the second VA). When using synthesis algorithms based on alpha-blending the embodiments may provide substantial bandwidth gain without no or negligible degradation of the quality of the synthesized views.

In an embodiment, content associated with the different VAs associated with different viewpoints in the scene may be projected in one frame. For example, omnidirectional or volumetric content of different VAs may be projected based on e.g. an equirectangular, cube map, or other projection in a sequence of video frames. A video frame comprising two or more projections of pre-rendered content of different VAs may be referred to as a multi-view area frame. Further, a sequence of multi-VA frames may be stored based on any known format that is used in content streaming, e.g. an MPEG transport stream. The sequence of multi-VA frames may be referred to as a multi-VA frame collection (MVFC). MVFCs allow improved user experience and reduced latency associated with switching between VAs. Further, streaming the content associated with different VAs as an MVFC eliminates the need for multiple decoders on the client side. In an embodiment, the content associated with the different VAs in an MVFC may be of different quality versions. This way, a bandwidth gain can be achieved without any effect or a minimal effect on the quality of the views that are synthesized based on these VAs of different qualities.

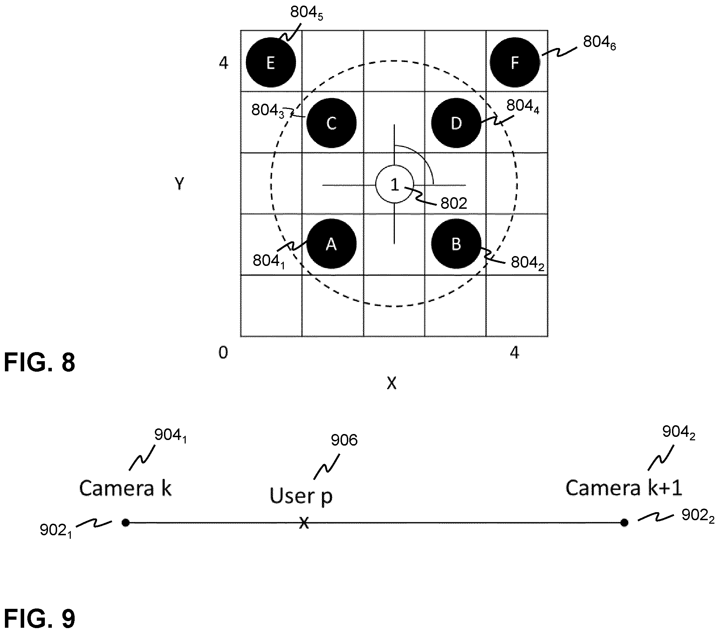

Thus, bandwidth savings can be achieved by decreasing the quality of the content associated with one or more VAs that have a low contribution in the synthesis process, since the bandwidth required per view correlates with the quality required for synthesis of new content. The synthesis process will require less resources compared to prior art schemes because content of low quality is used for the processed when possible. The use of content of different qualities, wherein the quality of content of different VAs is selected according to its contributions in synthesis (for example content of higher quality for VAs close to the user and content of a lower quality for VAs further away from the user), will not affect the quality of the synthesized view. In fact, experimental results (discussed below with reference to **Fig. 9)** based on an alpha blending approach, not only indicate comparable performance, but in some cases also better visual quality and preservation of details, especially for objects closer to the user. Specifically, synthesis based on different-quality (proposed) versions may produce sharper images than the same-quality (anchor) approach.

Hence, part of the embodiments in this disclosure relates to schemes for collecting content of multiple VAs in a single multi-VA frame, wherein the quality of the content associated with each VA is determined based on the distance between a VA and the user position. A multi-VA frame may comprise projected content, e.g. omnidirectional or volumetric content, of a plurality of VAs of different qualities. A multi-VA frame collection (MVFC) comprising a sequence of frames comprising tiles wherein different tiles comprise content associated with different VAs and different qualities allows a fast transition during playout of content from one VA to another VA, while using a single decoder instance at the client side. The selected quality of the content of each VA may depend on the current position of the user in the scene, so that a VA closer to the user position may be associated with a higher quality than a VA further away from the current position, thus improving visual quality without exceeding bandwidth demands. The MVFCs can be stored at a server or in the cloud and potentially be re-used, reducing the latency to deliver the same content to subsequent users.

Typically, a scene will have multiple VAs and often content of two or more VAs may be consumed by a display device at the same time, having even just three qualities for each VA (for example low/mid/high quality) with triple the number of streams required to be available. Frames comprising projected content from multiple VAs may be packaged together in one frame (e.g. as different independently decodable tiles) to reduce the need for using multiple decoders.

Taking both aspects into account would imply that many combinations of VAs should be produced in advance and for each combination additional qualities (i.e., bitrates and resolutions) for each VA should be available. Creating all the possible combinations of VAs and qualities in advance however would require enormous storage space and processing capabilities/time. Hence, in an embodiment, not all MVFCs are created in advance, but instead created and stored when requested and then reused (as a whole or in part), when the same request or a similar request arrives.

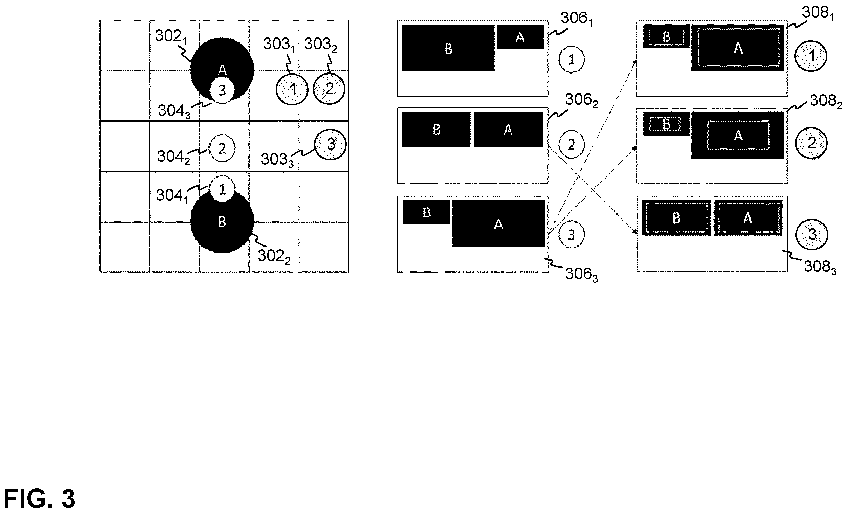

Fig. 3 illustrates a scheme for processing content according to further embodiment. As shown in the figure, a first user may browse part of the scene. During this process, MVFCs $306_{1-3}$ may be created based on content of first VA 302, and second VA $302_2$ and first positions $304_{1-3}$ of the first user in a similar way as described with reference to Fig. 2. Here, the numbering of $304_{1-3}$ of the first user indicates the chronological order at which content was accessed and MVFCs were created for the first user. Further, it may be assumed that the MVFCs of the first user were prepared for all first user positions (i.e., 1-3) for the whole timeline.

A second user may browse part of the scene at a later stage. The second user may move via second user positions $303_{1-3}$ through the scene. In that case, the server system may determine if MVFCs $306_{1-3}$ that were created earlier, e.g. for the first user, can be re-used for the second user. For example, in this case at first position $303_1$ of the second user, the third MVFC $306_3$ including low-quality content of the second VA and high-quality content of the first VA can be reused. In a similar way, the server system may re-use the same first MVFC $306_3$ for the second position $303_2$ of the second user and the second MVFC $306_2$ (that was created the second viewpoint of the first user) for the third position 303s of the second user. This way, MVFCs that were already created may be reused as MVFCs for other (new) positions in the space of the extended application. MVFCs created based on existing MVFCs may be referred to as derived MVFCs. In further embodiments, if MVFCs cannot be reused for a certain position then a new MPFC may be created based on the content of the first and second VA and the distances between the user and the VAs. The server system may be configured to decide whether to downscale or crop content of a VA for composing a new MVFC, or just to transmit a pre-created MVFC.

In a further embodiment (not shown), creation of an MVFC may be based on parts of earlier created MVFCs. For example, may involve three VAs associated with a scene in which two users are consuming content. MVFC-A may be created for the first user in a first time period comprising content of VA-A and VA-B at low and medium quality, respectively. Moreover, the second user (having a different position in the scene) may-requests MVFC-B, which should contain VA-A and VA-C at low and medium quality, respectively. In that case, a server system can decide to extract the low-resolution content of VA-A from MVFC-A, either by manipulating the bitstream or by cropping the frames, and use it to compose MVFC-B using the extracted content from MVFC-A and VA-C. To decide on the reuse of content of MVFCs, the server system may use metadata indicating the quality of the content stream of a VA and the presentation timeline PTS of a stream associated with a VA. Using techniques such as compressed domain stitching, the relevant parts of a pre-created MVFC may be reused to create a new MPFC.

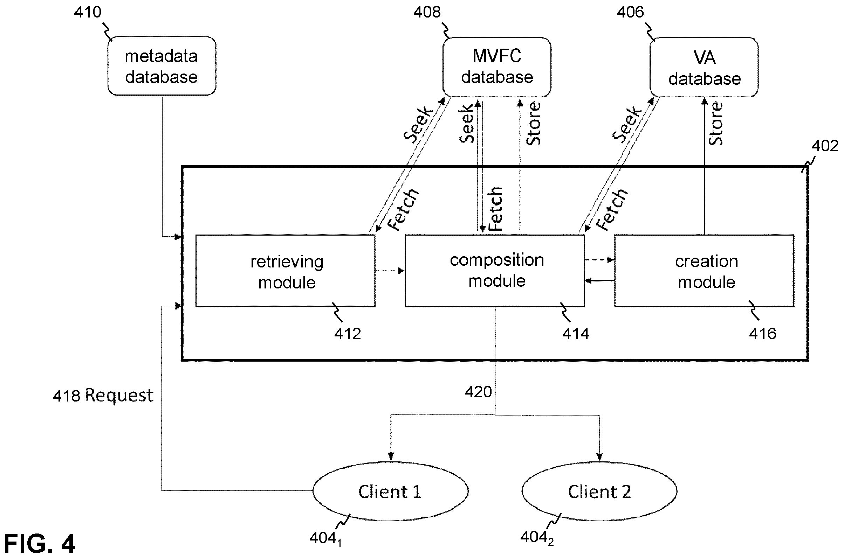

Fig. 4 depicts a high-level schematic of a system configured to process content according to an embodiment. The system may include a server system 402 connected to one or more databases 406-410 and clients $404_{1,2}$. The clients may be associated with a display device. In an embodiment, the server system may be part of a content delivery network (CDN) or a cloud-based content streaming system. The server system may be configured as a streaming server system for streaming pre-rendered content, e.g. omnidirectional content or volumetric content, associated with one or more VAs and possible one or more multi-VA frame collections (MVFCs) in a scene, to clients. The schemes for processing content as described with reference to Fig. 2 and 3 above may be used to efficiently stream content associated with different VAs and MVFCs to the clients.

The server system may be connected to one or more databases, including a VA database 406 configured for storing content associated with the VAs in a scene and a MVFC database 408 for storing MVFCs based on content of different PRVAs and of different quality that were created when one or more clients played back content based on different VAs in a scene. A further database **410** may be used for storing information, metadata, associated with a scene. This information, which may be referred to as scene information, may be stored in one or more files. The scene information may include one or more manifest files, e.g. MPDs and/or scene descriptors. A manifest file may comprise information about VAs and optionally MVFCs of a scene. This information may include VA identifiers, position information of the identified VAs, dimensions of the VA, resource locators for identifying content associated with a VA, quality identifiers for identifying different quality versions of content associated with a VA content type identifiers for identifying the type of content (e.g. 306 video, point cloud, mesh, etc.) associated with a VA and/or time information about the content timeline of content associated with a VA. The manifest file may further include one or more MVFC identifiers, the VAs that have been used to compose the composite video frames. The dimensions of the video tiles that contain the content of a VA, the video codec that has been used to code the composite video frames of an MVFC.

Clients may be provided with metadata of a scene and to use the metadata to request content associated with different VAs. To process requests from clients and to process newly created MVFCs, the server may include one or more modules **412-416** for processing requests **418** from the clients and for streaming requested content **420,** e.g. in the form of an MVFC to the clients.

As shown in the figure, the server may be configured to receive a content request **418** from a client, which may create the request based on information associated with a scene such as one or more manifest files, e.g. MPDs and/or scene descriptors. The request may include information about the position of the user of the streaming client. In particular, the request may include information about the position of the client within the scene. The information may also include information about the content timeline, for example one or more timestamps, such as the presentation timestamp (PTS) of a content stream. The information may further include the current download bitrate. Depending on the implementation, the request may also include: one or more VA identifiers that are needed for the synthesis of a new view, one or more positions associated with VAs and/or one or more MVFC identifiers that comprise VAs needed for the synthesis.

Based on the request, a first module **412,** e.g. a retrieving module, may request a first database **408,** such as an MVFC database, to identify if an already-existing MVFC can be used to process the client's request. If this is the case, composite video frames of an MVFC or part of the content of the composite video frames of the MVFC **420** may be streamed to the client directly. In an embodiment, this process may take place at a CDN-level, in case signalling and caching is implemented. If no MVFC can be found, the retrieving module may request a second module **414,** a composition module, to check the databases, e.g. the VA database **406** and MVFC database **408,** to find suitable VAs of the requested quality. In an embodiment, if one or more VAs are missing, the missing VAs may be constructed (i.e., generated or synthesized) by a third module **416,** a creation module. If a VA is created, the creation module may store the created VAs in the VA database. The creation module may inform the composition module that VAs are created so that it can synthesize the requested MVFC and streams it to the client. Further, the newly created MVFC may be stored at the MVFC database for future use. In some embodiment, the creation module may further comprise a renderer that is configured to provide uncompressed raster frame output.

It is submitted that the system depicted in **Fig. 4** can be implemented in many different ways. In some embodiments, the modules depicted in **Fig. 4** may be combined and/or integrated in one module or may be part of a further module or system. For example, the composition module and the creation module can be implemented either on one or more servers of a server system, the cloud, and/or one or more edge nodes of a server system. Implementing the modules on an edge node may assist in reducing latency to the client.

A decision to create an MVFC in response to a request of a client, may be taken either at the server side, e.g. by the composition module, and/or at the client side. In an embodiment, the decision to create an MVFC may be the result of an optimization algorithm that takes into account the availability of resources, the availability of existing or pre-created content (i.e. VAs and MVFCs), the latency sensitivity, and other application-dependent factors. The system depicted in **Fig. 4** may further comprise an encoder or transcoder for encoding or transcoding content. In an embodiment, the encoder or transcoder may be implemented in the composition module.

Further, the client or the server may be configured to determine or sense the location of the user. When a user changes position, the client may use metadata associated with the scene, e.g. manifest file such as an MPD, to determine the relevant VA or VAs for the new position. If the one or more VAs are not available (in which case, synthesis will be required), the client may determine which one or more VAs identified in the metadata are needed for synthesis of a view. The client may send a request for the one or more VAs to the server, which either retrieves an already existing MVFC comprising content associated with the VAs or generates a new MVFC based on content of stored or newly created VAs. Based on the MVFC, content of the scene associated with the position of the user may be generated. The content may be synthesized in the network (for example at a server or in the cloud) or at an edge server. In that case, the synthesized content may be streamed to the client so that it can be directly played out by the display device. In another embodiment, the content may be synthesized at the client. In that case, the system may stream an MVFC comprising composite video frames comprising content, e.g. tiles, of the requested VAs to the client. The client may then synthesize the pre-rendered content using the position of the user and the positions of the viewpoints associated with the PRVAs, so that it can be played back by the playback device.

Composite frames of an MVFC may include tiles, each tile being associated with content of a different VA. The composition module may generate such composite frames by selecting VAs based on information, e.g. user position and, in some embodiments, different VAs) in the request, wherein the content of the selected VAs may have multiple quality versions. After selecting a first and second content associated with a quality that depends on the distance between the user and the different VAs, the coded content of the selected VAs into decoded frames. In some embodiments, a certain scene may be cropped out of the frames. The cropped pictures associated with the first and second pre-rendered content may be used to form a composite (tiled or mosaic) frame. A sequence of these frames comprising the pictures of the first and second content may form the MVFC. The composite frames may be encoded using a suitable video codec and formatted in suitable transport container, e.g. a MPEG format or the like. In case of volumetric video, the data can be compressed using suitable video codecs (e.g. VPCC). Hence, the content associated with an VA may be computer generated volumetric data, e.g. a point cloud or a 3D mesh, representing a full virtual scene or e.g. 3D objects.

In an embodiment, the server may be configured as an adaptive streaming server for streaming the content based on segments to the clients. For example, the adaptive streaming server may be implemented as a HTTP adaptive streaming (HAS) server, wherein a streaming client may request the server for content associated with one or more VAs (e.g. as an MVFC) on the basis of metadata of a scene (such as a manifest file, e.g. a media presentation description (MPD) and/or a scene descriptor), to stream content segments (e.g. temporally segmented and, optionally, spatially segmented content) to the client.

When selecting VAs both the position of the user and the view direction of the user may be taken into account. For example, a user may be positioned in the scene based on location and view orientation. Then, video tiles associated with content of selected VAs corresponding to the current or a predicted orientation of the user may be delivered in high quality, with remaining video tiles may be delivered in lower quality, to synthesize a novel viewpoint. For example, in **Fig. 2** in case user being in position 3, while being oriented towards VA-B. Then, instead of transmitting $206_3$, it could be decided to transmit $206_2$ or $206_1$, in order to maintain high quality at the part of the view the user is visualizing. The quality levels may also be based on the position of the user as described with reference to the embodiments, i.e. video tiles that belong to more distant VAs are delivered in lower qualities with respect to tiles that belong to closer VAs.

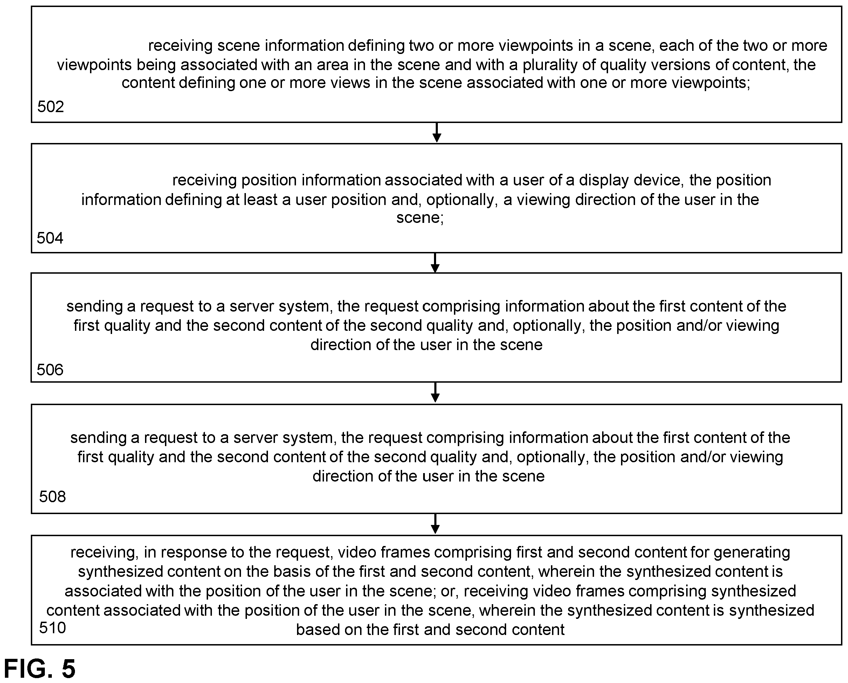

**Fig. 5** depicts flow diagram a method of processing content for an extended reality application according to an embodiment. The method may include receiving scene information defining two or more viewpoints in a scene, wherein each of the two or more viewpoints is associated with an area in the scene and with a plurality of quality versions of content, the content defining one or more views in the scene associated with a viewpoint (step **502**). Each of the two or more viewpoints may be associated with an area in a scene, i.e. a 3D space that is associated with a 3D coordinate system. Each viewpoint may be associated with a plurality of quality versions of content, wherein the defines a view of the scene which is associated with a viewpoint. The scene information may further define a plurality of resource locators for retrieving the pre-rendered content from a server system. In an embodiment, the scene information may include a manifest file and/or a scene descriptor.

In a further step **504,** the method may include receiving position information associated with a user of a display device, the position information defining at least a user position and, optionally, a viewing direction of the user in the scene. In an embodiment, the position information may also include the viewing direction of the user in the scene. In an embodiment, the display device may be head mounted device or an augmented reality glasses configured to augment the scene seen by the user based on content displayed on the glasses. In a further embodiment, the scene may be a virtual scene as viewed by the user using a head mounted device configured to playback content.

Then, if the user position is outside the areas associated with the two or more viewpoints, then selecting first content of a first quality associated with a first viewpoint and second content of a second quality associated with a second viewpoint in the scene on the basis of the position information and the scene information (step **506).** For example, the positions of the viewpoints as defined in the scene information and the user position may be used to identify at least two VAs, which may be of different qualities. For example, the quality of the VA closest to the user may be of a higher quality than the VA further away from the user and/or the quality of first and second content may depend on the viewing direction of the user of the display device.

The method may further comprise sending a request to a server system, the request comprising information about the first content of the first quality and the second content of the second quality (step **508).** In an embodiment, request may also comprise information about the position and/or viewing direction of the user in the scene.

In a further step **510** video frames comprising the first and second content may be received and used for synthesizing content associated with the position of the user in the scene. Alternatively, in case the synthesis is performed in the network, synthesized content associated with the position of the user in the scene may be received, wherein the content is synthesized based on the first and second pre-rendered content.

Thus, to control the processing and the streaming of content associated with VAs and MVFC s, metadata associated with content, such as a manifest file and/or a scene description, may be provided to the server and/or the client. For an MVFC at least part of the following metadata may be available on the server and transmitted to the client: information about the timeline of the content associated with an MVFC, for example information about the start time and stop time. These time instances may be provided as presentation timestamp (PTS) or any other suitable metadata. The metadata may further comprise information indicating a position in the scene (i.e. a viewpoint in the scene) which is associated with an MVFC and/or information identifying the VAs to which the content in an MVFC belongs to (i.e. the VAs that are used to create the composite frames of an MVFC). Additionally, in further embodiments, the metadata may comprise for each RA in an MVFC, the position in the content, e.g. in time (e.g. a byte range). In some embodiments, content extraction may take place on bitstream level before decoding. In that case, depending on the video codec that is used, the metadata may comprise information about tiles/bricks/blocks in the bitstream comprising the content of one or more VAs.

In some embodiments, the client may only send the user position to the server and the server will determine the VAs in desired quality. In other embodiments, the client may request VAs of different qualities to compose an output. In that case, the server may stream an MVFC comprising the requested VAs and the associated metadata that is needed to extract the content from the stream. In these embodiments, the server may be configured to decide what content may be reused, and/or what content will be sent to the client (which may differ from the original request of client).

When the client receives content of a requested MVFC, e.g. in the form of a stream of composite (tiled) video frames, it may receive metadata associated with the transmitted MVFC): information defining the tiles in a composite video frame of the MVC (e.g. tile identifiers, tile dimensions, content quality, etc.), one or more VA identifiers for identifying the VAs the content in the tile originates from, one or more VA positions in the modelled space (or grid) of a scene (if the request contains only the client/desired position). The amount of metadata transmitted to the client may depend on the information that is already available to the client prior to the sending of the request.

The metadata associated with the VAs and MVFC as described with reference to the embodiments, can be signaled to the client in different ways. In an embodiment, at least part of the metadata can be sent in a manifest file to the client. In a further embodiment, at least part of the metadata may be sent as part of the transport container (e.g. the ISO Base Media File Format ISOBMFF) to the client. In a further embodiment at least part of the metadata may be sent in the bitstream to the client (using e.g. SEI or VUI messages). In yet a further embodiment, at least part of the metadata may be sent in out of band to the client, for example via a separate metadata channel. Hereunder, some nonlimiting examples of metadata signaling are described.

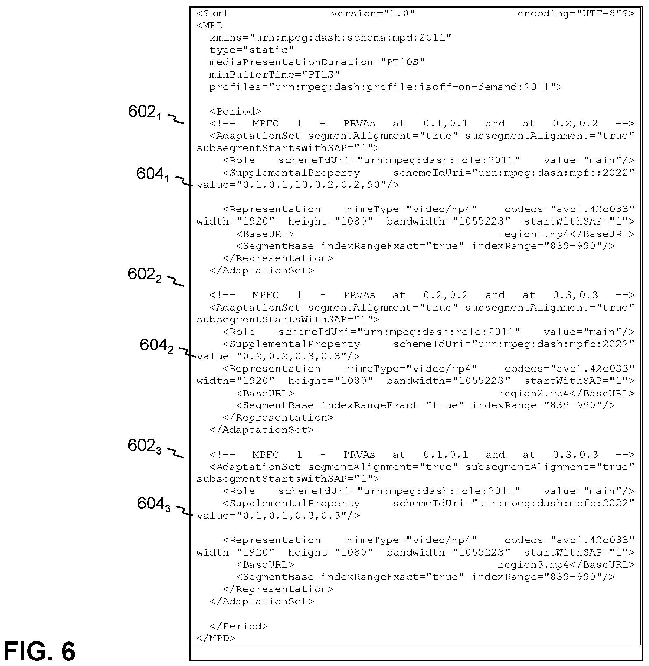

**Fig. 6** depicts an example of a manifest file for signaling part of an MVFC according to an embodiment. In particular, the figure illustrates an MPD for signaling an MVFC and associated parameters based on MPD descriptors, such as the Supplemental Property and/or Essential Property descriptors. These descriptors may include a scheme URI, a @schemeIdUri attribute schemeIdUri="urn:mpeg:dash:mpfc:2022 for signalling the client that content streaming based on MVFCs is supported. The scheme uri may be associated with a value parameters (@value attribute) for signaling the position of the VAs and the quality of the content associated with the VAs. A client may use the content of the MPD to determine the VAs in the MVFC, including the position of the VAs in a scene and the quality of the content associated with the PRVAs, and use this information to request content associated with the MVFC. The "value" property may comprise coordinates, e.g. X,Y coordinates providing information about the position of the Vas in the scene that are associated with the MVFC. The value property may include a parameter for indicating a quality of the PRVAs. For example, the quality of the content may be expressed in terms of a percentage of a maximum resolution or bitrate.

The MPD example signals MPFC information at a given time, describing multiple, in this example three, different representations $602_{1-3}$ based on three different VAs (a first VA at position 0.1,0.1, a second VA at 0.2,0.2 and third VA at 0.3,0.3). The value indicator associated with the first representation of the MVFC $604_1$ further indicates that the resolution of the content of VA 1 is set at 10% of a maximum value and the resolution of the content of VA 2 is set at 90% of a maximum value. The value indicator associated with the other two representations $604_{2,3}$ of the MVFC, do not contain a quality parameter thus indicating that the VAs defined in these MVFC representations are of the same resolution. New representations can be added for different resolutions/qualities.

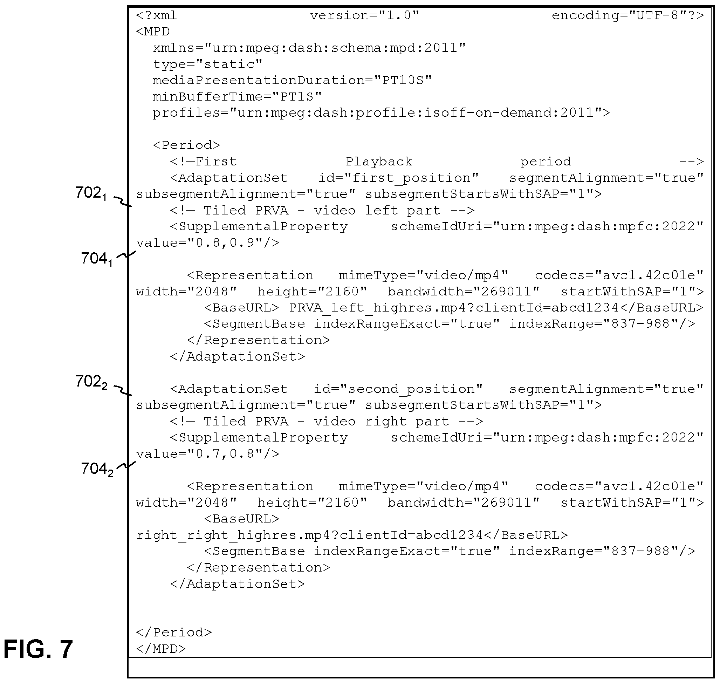

**Fig. 7** depicts an example of a manifest file for signaling an MPFC and associated parameters according to another embodiment. In particular, the figure illustrates an MPD for signaling an MPFC and associated parameters based on video tiles, wherein each tile represents content of a different PRVA. The concept of video tiles or tiled media is known amongst others from the HEVC-based viewport dependent OMAF video profile, which is part of the ISO/IEC 23090-2 standard (MPEG-OMAF), which is hereby incorporated by reference into this application. Also in this case, the MPD may include the scheme URI descriptor, a @schemeIdUri attribute schemeIdUri="urn:mpeg:dash:mpfc:2022 and a value (@value attribute). The MPD may define an MPFC comprising multiple, in this example two, PRVAs $702_{1,2}$. The client may request the MPFC or PRVAs in the MPFC using the value property in the SupplementalProperty Element. In this example the MPD includes two "value" attributes $704_{1,2}$ defining the position of a first PRVA at X:0.8, Y:0.9 and the position of a second PRVA at X:0.7, Y:0.8.

It is noted that the MPD examples are none limiting examples of manifest files that may be used to signal MPFCs and associated parameters to a client. Different representations of the "value" parameters may be used. For example, in an embodiment, the position parameter may include GPS coordinates. In another embodiment, the position parameter may indicate the position of the VA in the scene and, optionally, the view orientation of the content in the science (for example in case of omnidirectional video that is not complexly 360 and/or computer-generated content with a limited view of a scene). The MVFC and VA may be associated with identifiers, e.g. MVFC id and VA id, to identify the MVFC s and RAs associated with an MVFC. Further, the manifest file may include information about the content timeline of the content that is associated with the PRVAs in an MPFC.

Beside signaling based on a manifest file, other ways of signaling MVFCs can be used. For example, as described above with reference to **Fig. 7,** content associated VAs in an MVFC may be coded and formatted as video tiles. The video data such video tile may be stored as tracks as defined in ISOBMFF, ISO/IEC 14496-12. Hence, the content in composite video frames of an MVFC may be formatted as video tiles wherein each video tile represents an independent media stream that can be stored as a track in an ISOBMFF file. Such track may include a sequence of NAL units which are part of the network abstraction layer (NAL) of the H.264/AVC and HEVC video coding standards. This way, independent media streams associated with different PRVAs may be stored in the same data structure in separate tracks in a standardized way. Each tile may be identified by an identifier, a tile identifier in the NAL unit header. The MVFC composition module may use the tile identifier (or other similar signalling information in the NAL unit header) to identify which VA is in the bitstream and compose a new MVFC by extracting the required VAs from other MVFCs.

The VAs and the MVFCs comprising VAs that need to be distributed to the client may benefit from existing technologies used for multiview or stereoscopic video as for example defined by the multiview extensions for AVC/H.264 (MVC) or for HEVC/H.265 (MV-HEVC). On the file format level, there is signalling specified in ISO/IEC 14496-15 that specifies boxes to facilitate this. A multiview stream may be stored in different ways into tracks. In particular, a multiview stream carrying video data associated with different viewing angles of a scene may be stored in tracks of an ISOBMFF file different ways. This data format may be used to store content associated with different VAs as described with reference to the embodiments in this application.

In an embodiment, all content, e.g. video streams, associated with all VAs may be stored in one track, wherein each VA may be labelled as a sample group. In an embodiment, each video stream of an VA may be stored in its own track, wherein each VA is labelled as a sample entry. In that case, each VA may be accessed and streamed independently. In a further embodiment, one track may be used to store the content, e.g. video streams, of all VAs, and one or more single-view tracks may be used to store one or more single VAs. In that case, each single-view track includes video data of a view which is independently coded (i.e. is coded without any dependencies to video data of other views). In a further embodiment, content associated some VAs that will be used frequently may be stored in separate tracks.

When this approach is used, the boxes and/or SEI messages provided by ISO/IEC 14496-15 can be used, such as the ViewIdentifierBox attribute. In a similar way, further boxes and/or SEI messages may be introduced to fit the use of MPFCs. For example, in an embodiment, the "multiview view position" SEI message known from ISO/IEC 14496-15, which defines the position of a view on a horizontal axis, may be adjusted into a "VA view position" SEI message so that it can be used for signaling information on VAs. Such SEI message may be used to indicate the position of a RA in the coordinate system of a scene.

It is noted that the different ways of signaling information (metadata) associated with VAs and MVFC comprising such VAs based on manifest files and based on messages in the bitstream (such as SEI messages) may be used separately and/or in combination.

Different ways of selecting VAs from existing MVFCs are possible. The system may for example check if suitable VAs are available in the pre-created content in a similar way as described with reference to **Fig. 4.** If the VAs are not available, the system may create an MVFC and store the created MVFC in a database. If VAs are available, different options are available. If all VAs have the desired quality, the content can be made available for download and/or streaming immediately. If not all VAs are available or if the quality of the content of available VAs is too high or too low, one or more VAs may be created and/or resized. The decision to create or resize a VA may be based on: expected processing latency (influenced by current processing being done on the server, complexity of the content, etc.) and the expected delivery time (based on the number of bytes that are saved when transmitting lower bitrate video).

Fig. 8 depicts a method for selecting a representation of a VA according to an embodiment. As shown in the figure, an MVFC may be created for a user position $802$ within a space comprising a plurality of VAs $804_{1-6}$. Hence, the selection of the VAs may be based on the user position, the position of the VAs and, in some embodiments, based on a viewer direction, which defines a viewer area $806$ which the user can visually access. Thus, VAs $804_{1-4}$ that positioned within a certain radius $808$ around the user position may be identified. Based on the viewer area, VAs $804_1$ may be selected that are located within the viewer direction may be determined. Then, if more VAs candidates are available, one VA $804_1$ may be selected, e.g. the VA closest to the user position.

Fig. 9 depicts a method of determining a resolution for a VA according to an embodiment. The figure shows a first and second VA $902_{1,2}$ in a scene wherein the content of the first VA is captured using a first camera $904_1$ and the content of the second VA is captured using a second camera $904_2$. When a client has to request content associated with the first and second VA for synthesizing new content that is associated with user position $906$ (which is outside the areas of the first and second view areas) distance between the VAs may be used to determine the desired resolution of both: full (100%) resolution if a user is at within the area of the first VA, zero resolution at the location of the other, second location. When the user at a position between the first and second camera, the quality of the first and second content may be computed based on ratio of the distances between the positions of the user and the cameras in the scene. Thus, when determining the desired quality of the content of the VAs that are in view, each VA may be checked if a desired resolution for content associated with the VA is available for a specific point in time or a specific period on the content timeline. If a desired resolution is not available, then a VA that is close to the desired quality may be selected and the content of that VA may be used to create the desired resolution.

The embodiments in this application aim to use of content of different VAs having different qualities in the synthesis of content for a new VA for a user position in the scene that is outside the areas of the VAs. Lopez-Gulliver et al. in their article "Synthesis of omnidirectional movie using a set of key frame panoramic images." In 2015 IEEE Virtual Reality (VR), pp. 221-222. IEEE, 2015 use an alpha blending method for pixel-wise (bi-)linear interpolation (i.e., depending on whether the user's movements are in 1D or 2D) applied between the closest reference 360 images, with the alpha value being adjusted based on the current position of the user. The formula for this alpha blending method is provided by Eq. (1):

$$V_{new}(x,y) = (1-a) * V_k(x,y) + a * V_{k+1}(x,y) \qquad (1)$$

Here, $V_k$ and $V_{k+1}$ denote panoramic images from cameras $k$ and $k+1$ respectively and $\alpha$ a weighting factor computed from the ratio of the distances between the positions of the user and the cameras in the scene. Cho et al describe in their article "Novel view synthesis with multiple 360 images for large-scale 6-dof virtual reality system." in 2019 IEEE Conference on Virtual Reality and 3D User Interfaces (VR), pp. 880-881. IEEE, 2019 a view synthesis method wherein the 3D geometry of the scene is initially recovered using a structure-from-motion technique and the extrinsic parameters of the cameras that were used to capture the scene are estimated. Then, the two closest reference 360 images are projected to novel view images via ray-casting. These view images are blended in a pixel-wise fashion according to the distance of the user from each reference 360 image according to Eq. (2), resulting in a novel viewpoint that is displayed to the user:

$$V_{new}(x,y) = \frac{I_k(x,y)*d2 + I_{k+1}(x,y)*d1}{d1+d2} \qquad (2)$$

Here, $I_k$ and $I_{k+1}$, denote 360 images from cameras $k$ and $k+1$ respectively and d1 and d2 define the distance between the user and the cameras. The formulas clearly indicate that the contributions of a reference 360 image to a newly synthesized view/viewpoint are inversely proportional to the distance of the user from the location of that reference 360 image.

Lopez-Gulliver et al, "Synthesis of omnidirectional movie using a set of key frame panoramic images." IEEE Virtual Reality (VR), pp. 221-222. IEEE, 2015 describes a synthesis algorithm which uses reference images with the same quality for synthesis purposes. A newly prosed variant of this algorithm, hereafter named as alpha-quality blending, makes use of reference images with different quality for synthesis purposes. The synthesized views generated from the above two algorithms are compared in order to review the effect of using reference images of different quality.

In the experiments a setup was created similar to **Fig. 9** wherein conventional 2D images instead of 360-images/videos are used. The results however can be straightforwardly generalized to different types of images. Moreover, in the absence of suitable datasets for the target use case, it was decided to make use of raw video sequences with appropriate motion characteristics and use subsets of individual frames to simulate reference images (or VAs) that are captured from different camera positions within a scene. Various user positions across this timeline are considered and used to generate corresponding synthesized views. From cameras $k$ and $k+1$, reference images $I_k$ and $I_{k+1}$ are captured respectively, while the user position $p$ is assumed to be somewhere in-between. The formula for alpha blending to generate the synthesized view $S_p$ is then given by equation 3, with $a$ computed from the ratio of the distances between the positions of the user and the cameras in the scene.

$$S_p(x,y) = (1-a) * I_k(x,y) + a * I_{k+1}(x,y) \qquad (3)$$

Finally, various target total bitrates are considered that need to be respected by the two reference images that are being used for synthesis. This total bitrate is obtained by summing the individual bitrates of the two reference images. In the alpha blending case, the two reference images have the same quality, while in the alpha-quality blending case, the two reference images will generally have different quality levels. In order to enable a fair comparison between the two methods, the total bitrate in both cases is the same.

The results were obtained based on the publicly available video sequence Netflix_DrivingPOV. Frames 0 and 32 were selected to represent the reference images, the user position was selected to be in the 25% of the distance between the two corresponding camera positions, and the total bitrate was equal to 150KB.

For the alpha blending case, the bitrate of the reference images is the same and equal to the half of the total bitrate. For the alpha-quality blending case, the bitrate for the reference images is set to be inversely proportional of the distance between the user and the corresponding camera positions. In the case that the user is at the 25% of the distance between cameras $k$ and $k + 1$, the bitrate for the reference images $I_k$ and $I_{k+1}$ is set to 75% and 25% of the total bitrate, respectively. Thus, the alpha blending represents a medium-medium quality allocation, while the alpha-quality blending case represents a high-low quality allocation.

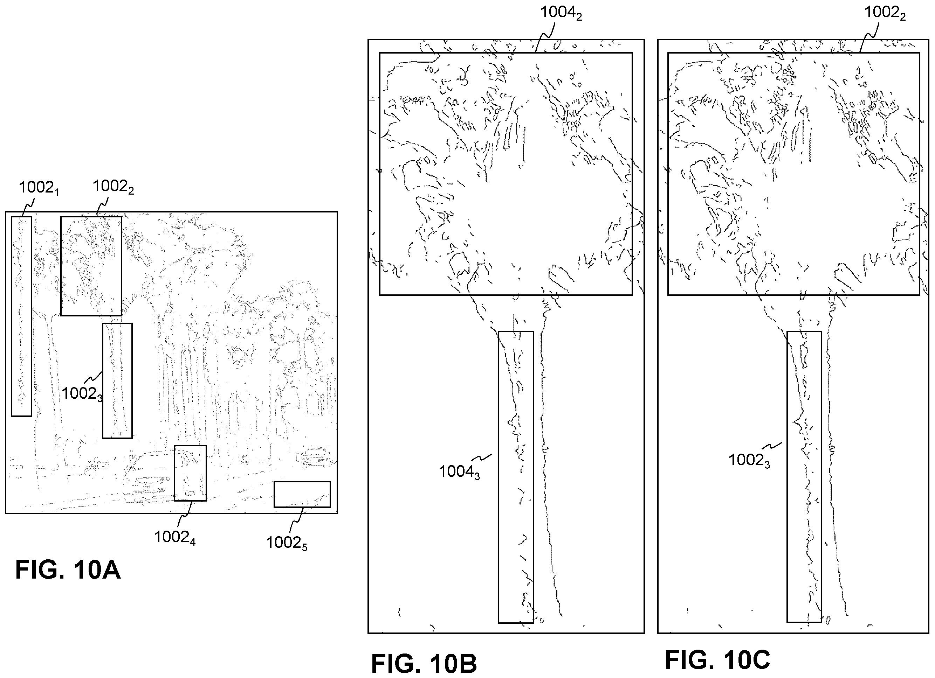

In the absence of a reference, the visual quality of the synthesized views cannot be computed via reliable objective quality metrics. Thus, emphasize is made on the detail preservation that is achieved by the two alpha blending variants to come to a conclusion. Specifically, a Canny edge detection algorithm is applied on top of the corresponding synthesized views, using the implementation of FFmpeg with default parameters. To that end, synthesized views were created using the alpha blending approach and the alpha-quality blending approach. **Fig. 10A** shows a full picture that was created by the alpha-quality blending approach. An identical picture (not shown) was created based on the conventional alpha blending approach. The picture of **Fig. 10A** includes areas **$1002_{1-5}$** which were used to examine the two approaches. **Fig. 10C** show a cropped and enlarged parts of areas **$1002_{2,3}$** of **Fig. 10A**. These areas were then compared with the same areas **$1004_{2,3}$** that were generated using the alpha blending as shown in **Fig. 10B).**

Fig. 10A and **10B** show that details are somewhat better preserved in the alpha-quality blending approach. Inspection of the results across the entire parameter space indicate little to no difference at high total target bitrates i.e., differences were more evident at lower total target bitrates. Moreover, wherever differences were spotted, the best results were always in favor of the alpha-quality blending approach. These results confirm that details, or more generally visual quality is better preserved using alpha-quality blending. The rule that was used to allocate bitrate to closer and further reference images was not optimized nevertheless, even with this naive approach, benefits were observed.

In a second experiment, instead of adjusting the quality of both reference images in alpha-quality blending approach, the same quality as in alpha blending for the closer reference image was kept, and the quality of the further reference image was arbitrarily decreased. In particular, for alpha blending two 4K reference images were used, whereas for alpha-quality blending 4K for the closer and 1K for the further reference image was used. Thus, in this case, a high-high quality allocation for alpha blending and high-low for alpha-quality blending is used. The rest of the parameters (i.e. video sequence, frame selection, and user positions) remained the same.

Visual comparisons between the synthesized views obtained from this experiment, showed no difference for both low and high bitrates, implying that the alpha-quality blending variant leads to bitrate gains. Moreover, after edge detection, negligible differences were observed in detail preservation between the two approaches. As with the scheme for bitrate allocation, the resolution for the further view is chosen in a naive way, without assuming any optimality. Overall, the results show that alpha-quality blending exhibits advantages over the anchor alpha blending approach, in both experiments that were aiming at exploring gains in terms of visual quality and bitrate, respectively.

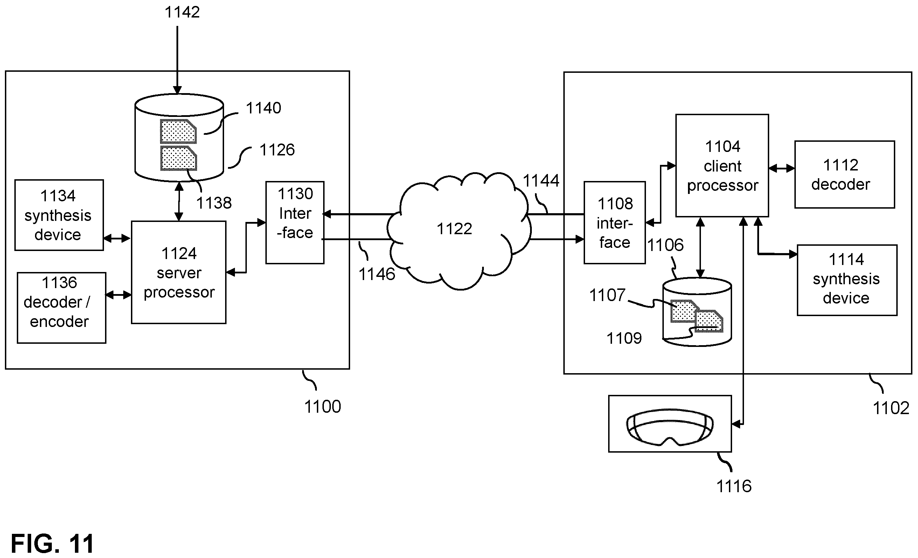

**Fig. 11** depicts a schematic of a system configured to process content for extended reality applications according to the embodiments in this application. The system, which may be an implementation of the content processing system of **Fig. 4,** may include a server system **1100** and playback device **1102** connected to a display device **1116.** The playback device may include a client processor **1104** and a network interface **1108** for establishing communication with the server system. The client processor may be connected to data storage **1106,** a buffer, for storing content **1107** received from the server system, e.g. a streaming server. The playback device may also comprise a decoder **1112** for decoding content data. The playback device is configured to process the content data so that it can be displayed to the user using an extended reality display device **1116.** Further, the playback device may comprise one or more sensor modules which are configured to determine the position, pose and/or viewing direction of the user. The position of the user may also be determined using a GPS module.

The buffer may also be used for storing scene information **1109,** i.e. metadata, that is needed for requesting and processing content. This metadata has been described with reference to the embodiments in this application and may include scene information describing a modelled scene comprising viewing areas VAs and content associated with the VAs. Typically, at least part of the metadata may be sent and stored as one or more manifest files and/or scene descriptors in the buffer. Alternatively and/or in addition, part of the metadata may be sent to the playback device during video streaming, e.g. as part of the transport container that is used for streaming the content or in a bitstream.

In a similar way, the server system **1100** may include a server processor **1124,** a network interface **1130** for establishing communication with the rendering device and a storage medium **1126** for storing content that can be consumed by the playback device. The server system may be further configured to receive content **1142** from other server systems or a content authoring system and store the content on the storage medium. The content **1138** stored on the storage medium may include content for extended reality applications, including video data captures by a camera system, e.g. 2D video data (which may include depth information), 360 video data and omnidirectional video data and computer-generated data (synthetic or pre-rendered data) such as point cloud, textures and 3D models. The content may be associated with different VAs for one or more modelled scenes. Scene information **1140,** associated with the content may include all information (metadata) that is needed to process content for a modelled scene as described with reference to the embodiments in this disclosure. The scene information may further include a scene descriptor file which describes the 3D objects that belong to a certain scene. The server system may be configured to receive and process requests for content data from the client processor The server system may further include a decoder / encoder system **1136.**

The client processor may send a request **1144** for content data via one or more networks **1122** to the server system. The request may include information, e.g. content identifiers, user position, viewing direction, etc., that can be used by the server system to select the requested content data. The server system may send the requested content data in one or more content streams **1146** to the playback device, wherein the client processor of the playback device will process the content in accordance with the embodiments in this application so that it can be displayed by the display device.

The client processor may use information in a manifest file and the position of the user in the scene and, optionally the viewing direction of the user, to request the server system to transmit content which can be used by the playback device to generate a view of the scene at the position of the user. The content may include video frames comprising content of different viewing areas in a modelled scene. The content may be used for generating synthesized content associated with the position of the user of the playback device in the scene. The quality of the content associated with different VAs may be selected based on the distance between the position of the user in the scene and the position of the VAs in the scene.

In an embodiment, the content associated with the different VAs may be transmitted by the server system as composite (tiled) video frames to the playback device. In that case, the playback device may include a synthesis device **1114** which is configured process the content (e.g. extract the content from the composite video frames) and synthesize new content associated with a user position in the scene based on the content provided by the server system. In another embodiment, the server system generates the synthesized content and transmits the synthesized content to the playback device. In that case, the server system may comprise a synthesis device **1134** which is configured to synthesize the new content based on the different VAs. Server-based synthesis is especially advantageous where the playback device is a wireless playback device such as AR glasses that has limited battery and processing capabilities. The content processing system of Fig. **11** may include all content processing schemes and modules as described above with reference to **Fig. 1-4.**

In an embodiment, the network interface of the server system may be a wired communication interface, such as an Ethernet or fiber-optic based interface. The network may for example be the Internet or a mobile network, wherein the streaming server may be connected to a fixed part of the mobile network. Alternatively, in another embodiment, the network interface may be a wireless communication interface, which may also be referred to as a radio interface, and which may be configured to connect to a mobile network infrastructure. In some examples, the network interface may comprise a radio interface, for example an 4G or 5G radio interface for connecting to a 4G or 5G mobile network adhering to one or more 3GPP standards, or a Wi-Fi communication for connecting to a Wi-Fi network infrastructure or any other wireless interface.

In an embodiment, the playback device may be implemented as an extended reality playback device, which is configured to execute the processing steps (or a subset thereof) as described with reference to the embodiment in this application. In an embodiment, s method of processing content may include retrieving a scene descriptor file for a scene to be rendered by the playback device. Such scene descriptors are known from ISO/IEC DIS 23090-14: Scene Description for MPEG Media. Based on the scene descriptor file, the client processor may identify and download 3D assets, e.g., from the server system. In some examples, the client processor may download 3D assets of associated with a scene, while in other examples, the client may download only part of all 3D assets, e.g., only those 3D assets which are visible from a user's viewpoint in the scene.

In various embodiments, the playback device may be implemented as tethered or untethered AR glasses, a HMD or an AR heads-up display, which may be configured to render spatially aligned 3D and 2D assets over an external environment, e.g., over the viewer's physical surroundings. In an embodiment, the server system may act as rendering server for the playback device and may include a storage medium comprising content data of the scene to be rendered, including descriptor files, 3D/2D assets representing 3D/2D graphics objects, etc. Further, the server system may have the ability to render part of a scene, e.g., as an omnidirectional frame, encode/transcode, package, and distribute the rendered scene part and any other generated assets.

During operation, the client processor may retrieve one or more descriptor files and/or manifest files that contain information on the scene and the available and/or required assets. The assets themselves may be stored at/by the server system or another server, e.g. a content or media server, connected to the server system. In an embodiment, the server system or the content server may be part of a content delivery network (CDN). The descriptor files may include, or represent, the scene descriptor data as described elsewhere. Based on the scene descriptor data, the client processor may download those assets which are needed to render the scene. In some embodiments, the client processor may download all assets so as to be able to render the scene offline, e.g., even if network connectivity is interrupted. After parsing the descriptor(s), e.g., as contained in the scene descriptor data, the client processor may select which of the required assets are to be rendered, for example on the basis of criteria such as visibility.

Streaming technologies that may be used for streaming content data, including but not limited to e.g. conventional 2D data, 360 video data, pre-rendered synthetic content data, omnidirectional or volumetic content data, etc., to the client processor may include HTTP adaptive streaming (HAS) schemes, for example MPEG-DASH and HTTP Live Streaming (HLS), that specify adaptive bitrate video streaming schemes based on video data and associated metadata. The content data may be organized and structured based on a certain data format which may be defined by a HAS streaming standard or MPEG-CMAF which describes encoding and packaging schemes for segmented objects. CMAF is an ISO standard developed by MPEG harmonizing codec profiles and segment formats for HAS schemes such as MPEG-DASH and HLS. In some embodiments, the data format of the content data may include playback periods including one or more adaptation sets, an adaptation set including media representations of different resolution and/or quality and a representation including a sequence of media segments, wherein a media segment includes a compressed video data of a predetermined quality.

The metadata associated with the video data may be organized in a manifest file or a manifest file update patch, which includes metadata to transform a manifest file a client apparatus is currently using, into a manifest file for the next playback period. During the video creation process manifest files may be generated and stored together with the video data on a media storage device. A manifest file may be referred to in MPEG DASH as a Media Presentation Description (MPD) and may be structured in accordance with a certain machine-readable document format, e.g. XML, JSON or the like. A manifest file may comprise information about media assets, e.g. media streams including video and audio streams, that are available to the client apparatus and information how a client apparatus can retrieve these media assets. A manifest file may include segment identifiers, e.g. in the form of URLs, so that a client apparatus is able to request video segments from a server. Different ways for signaling the segment identifiers may be used e.g. URL templating, explicit URLs, etc.

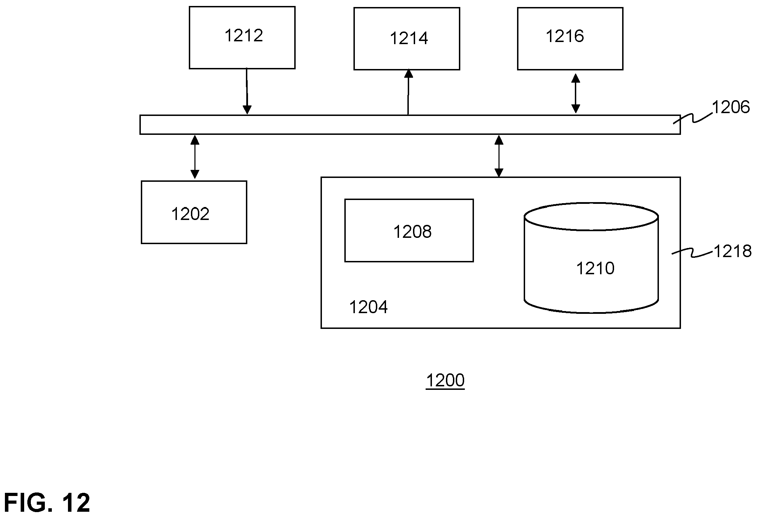

**Fig. 12** is a block diagram illustrating an exemplary data processing system that may be used in as described in this disclosure. Data processing system **1200** may include at least one processor **1202** coupled to memory elements **1204** through a system bus **1206.** As such, the data processing system may store program code within memory elements **1204.** Further, processor **1202** may execute the program code accessed from memory elements **1204** via system bus **1206.** In one aspect, data processing system may be implemented as a computer that is suitable for storing and/or executing program code. It should be appreciated, however, that data processing system may be implemented in the form of any system including a processor and memory that is capable of performing the functions described within this specification.

Memory elements **1204** may include one or more physical memory devices such as, for example, local memory **1208** and one or more bulk storage devices **1210.** Local memory may refer to random access memory or other non-persistent memory device(s) generally used during actual execution of the program code. A bulk storage device may be implemented as a hard drive or other persistent data storage device. The data processing system **1200** may also include one or more cache memories (not shown) that provide temporary storage of at least some program code in order to reduce the number of times program code must be retrieved from bulk storage device **1210** during execution.

Input/output (I/O) devices depicted as input device **1212** and output device **1214** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1216** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system.

As pictured in **Fig. 12,** memory elements **1204** may store an application **1218.** It should be appreciated that data processing system may further execute an operating system (not shown) that can facilitate execution of the application. Application, being implemented in the form of executable program code, can be executed by data processing system, e.g., by processor **1202.** Responsive to executing application, data processing system may be configured to perform one or more operations to be described herein in further detail.

In one aspect, for example, data processing system may represent a client data processing system. In that case, application **1218** may represent a client application that, when executed, configures data processing system to perform the various functions described herein with reference to a "client". Examples of a client can include, but are not limited to, a personal computer, a portable computer, a mobile phone, or the like.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. Method of processing content by a client, the method comprising:

   receiving scene information defining two or more viewpoints in a scene,
   wherein the scene is a modelled 3D space, each of the two or more viewpoints being associated with an area in the scene and with a plurality of quality versions of video content, the video content defining one or more views in the scene associated with a viewpoint, wherein the viewpoint is a position in the scene for which the video content is pre-rendered;
   receiving position information associated with a user of a playback device, the position information defining at least a user position and, optionally, a viewing direction of the user in the scene;
   if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene based on the position information and the scene information, wherein the second content is pre-rendered video content for the second viewpoint;
   sending a request to a server system, the request comprising information about the first content of the first quality and the second content of the second quality, wherein the first quality is different from the second quality, and, optionally, the position and/or viewing direction of the user in the scene; and,
   receiving, in response to the request, video frames comprising the first and second content for generating synthesized content on the basis of the first and second content, wherein the synthesized content is associated with the user position in the scene, the synthesized content providing a view for the user position in the scene; or, receiving video frames comprising synthesized content associated with the user position in the scene, wherein the synthesized content is synthesized based on the first and second content, the synthesized content providing a view for the user position in the scene.

2. Method according claim 1 wherein the first content and second content are selected based on the distance between the user position and each of the two or more viewpoints and, optionally, based on the orientation and/or viewing direction of the user in the scene.

3. Method according to claims 1 or 2 wherein the first quality of the first content and the second quality of the second content are determined based on a distance between the user position and the first viewpoint and between the user position and the second viewpoint, preferably the first and second quality decreases when the distance between the user position and the first and second viewpoint respectively increases.

4. Method according to any of claims 1-3 wherein the video frames comprising first and second content are implemented as composite frames, each composite frame including at least a first video tile comprising the first content and a second video tile comprising the second content, the first video tile representing a view of the scene associated with the first viewpoint and the second tile representing a view of the scene associated with the second viewpoint.

5. Method according to any of claims 1-5 further comprising:
synthesizing the frames comprising first and second content based on the scene information, the position of the user in the scene and based on the position of the first and second viewpoint in the scene.

6. Method according to any of claims 1-5 wherein the first and second content is projected into the frames based on a predetermined projection scheme, for example an equirectangular projection, a cube-map projection, a pyramid projection or an equi-angular cubemap projection, pyramid projection.

7. Method according to any of claims 1-6 wherein at least part of the scene information is signaled to a client based on a manifest file, preferably a media presentation description (MPD), preferably scene information including one or more of: area identifier for identifying an area in the scene associated with a viewpoint, viewpoint position information identifying a position of a viewpoint in the scene, information about dimensions of an areas associated with a viewpoint, one or more resource locators for identifying content associated with a viewpoint, a quality metric for defining a quality of content associated with a viewpoint.

8. Method according to any of claims 1-7 wherein at least part of the scene information is signaled to a client based on a bitstream, preferably SEI messages

9. Method according to any of claims 1-8 wherein the first and/or second content includes volumetric data, omnidirectional data, pre-rendered computer-generated content and/or camera-generated content, for example real-time camera generated content.

10. Method according to any of claims 1-10 wherein the synthesis of the view is performed by a client, an edge server or a cloud server; and/or, wherein the content and/or the scene information is stored on a server system

11. Method according to any of claims 1-10 wherein the client apparatus is implemented as an HTTP adaptive streaming client apparatus, such as a MPEG DASH client apparatus, and wherein the manifest file defines a media presentation description MPD, wherein MPD includes

12. Method of processing content by a server, the method comprising:

receiving or determining scene information defining two or more viewpoints in a scene, wherein the scene is a modelled 3D space, each of the two or more viewpoints being associated with an area in the scene and with a plurality of quality versions of content, the content defining a view in the scene associated with a viewpoint, wherein the viewpoint is a position in the scene for which the video content is pre-rendered;
receiving position information associated with a user of a playback device, the position information defining at least a user position and, optionally, a viewing direction of the user in the scene;
if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene, wherein the second content is pre-rendered video content for the second viewpoint, on the basis of the position information, wherein the first quality is different from the second quality;
transmitting video frames comprising the first and second content for generating synthesized content on the basis of the first and second content, wherein the synthesized content is associated with the user position in the scene, the synthesized content providing a view for the user position in the scene; or, transmitting video frames comprising synthesized content associated with the user position in the scene, wherein the synthesized content is synthesized based on the first and second content, the synthesized content providing a view for the user position in the scene.

13. A client apparatus for processing content comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:

receiving scene information defining two or more viewpoints in a scene, wherein the scene is a modelled 3D space, each of the two or more viewpoints being associated with an area in the scene and with a plurality of quality versions of video content, the video content defining one or more views in the scene associated with a viewpoint, wherein the viewpoint is a position in the scene for which the video content is pre-rendered;

receiving position information associated with a user of a playback device, the position information defining at least a user position and, optionally, a viewing direction of the user, in the scene;

if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene, wherein the second content is pre-rendered video content for the second viewpoint, based on the position information and the scene information, wherein the first quality is different from the second quality;

sending a request to a server system, the request comprising information about the first content of the first quality and the second content of the second quality and, optionally, the user position and/or viewing direction of the user in the scene; and,

receiving, in response to the request, video frames comprising the first and second content for generating synthesized content on the basis of the first and second content, wherein the synthesized content is associated with the user position in the scene, the synthesized content providing a view for the user position in the scene; or, receiving video frames comprising synthesized content associated with the user position in the scene, wherein the synthesized content is synthesized based on the first and second content, the synthesized content providing a view for the user position in the scene.

14. A server apparatus for processing pre-rendered content comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:

receiving or determining scene information defining two or more viewpoints in a scene, wherein the scene is a modelled 3D space, each of the two or more viewpoints being associated with an area in the scene and with a plurality of quality versions of content, the content defining a view in the scene associated with a viewpoint, wherein the viewpoint is a position in the scene for which the video content is pre-rendered;

receiving position information associated with a user of a playback device, the position information defining at least a user position and, optionally, a viewing direction of the user, in the scene;

if the user position is outside the areas associated with the two or more viewpoints, then selecting first content of a first quality associated with a first viewpoint, wherein the first content is pre-rendered video content for the first viewpoint, and selecting second content of a second quality associated with a second viewpoint in the scene, wherein the second content is pre-rendered video content for the second viewpoint, on the basis of the position information, wherein the first quality is different from the second quality;

transmitting video frames comprising the first and second content for generating synthesized content on the basis of the first and second content, wherein the synthesized content is associated with the user position in the scene, the synthesized content providing a view for the user position in the scene; or, transmitting video frames comprising synthesized content associated with the user position in the scene, wherein the synthesized content is synthesized based on the first and second content, the synthesized content providing a view for the user position in the scene.

15. Computer program product comprising software code portions configured for, when run in the memory of a computer, executing the method steps according to any of 1-12.

FIG. 1A

FIG. 1B

EP 4 391 550 A1

**FIG. 2**

FIG. 3

FIG. 4

EP 4 391 550 A1

receiving scene information defining two or more viewpoints in a scene, each of the two or more viewpoints being associated with an area in the scene and with a plurality of quality versions of content, the content defining one or more views in the scene associated with one or more viewpoints;
502

receiving position information associated with a user of a display device, the position information defining at least a user position and, optionally, a viewing direction of the user in the scene;
504

sending a request to a server system, the request comprising information about the first content of the first quality and the second content of the second quality and, optionally, the position and/or viewing direction of the user in the scene
506

sending a request to a server system, the request comprising information about the first content of the first quality and the second content of the second quality and, optionally, the position and/or viewing direction of the user in the scene
508

receiving, in response to the request, video frames comprising first and second content for generating synthesized content on the basis of the first and second content, wherein the synthesized content is associated with the position of the user in the scene; or, receiving video frames comprising synthesized content associated with the position of the user in the scene, wherein the synthesized content is synthesized based on the first and second content
510

# FIG. 5

```
<?xml                    version="1.0"                    encoding="UTF-8"?>
<MPD
  xmlns="urn:mpeg:dash:schema:mpd:2011"
  type="static"
  mediaPresentationDuration="PT10S"
  minBufferTime="PT1S"
  profiles="urn:mpeg:dash:profile:isoff-on-demand:2011">

  <Period>
  <!--    MPFC    1    -    PRVAs    at    0.1,0.1    and    at    0.2,0.2    -->
  <AdaptationSet segmentAlignment="true" subsegmentAlignment="true"
subsegmentStartsWithSAP="1">
    <Role    schemeIdUri="urn:mpeg:dash:role:2011"    value="main"/>
    <SupplementalProperty    schemeIdUri="urn:mpeg:dash:mpfc:2022"
value="0.1,0.1,10,0.2,0.2,90"/>

    <Representation    mimeType="video/mp4"    codecs="avc1.42c033"
width="1920"  height="1080"  bandwidth="1055223"  startWithSAP="1">
      <BaseURL>                            region1.mp4</BaseURL>
      <SegmentBase indexRangeExact="true" indexRange="839-990"/>
    </Representation>
  </AdaptationSet>

  <!--    MPFC    1    -    PRVAs    at    0.2,0.2    and    at    0.3,0.3    -->
  <AdaptationSet segmentAlignment="true" subsegmentAlignment="true"
subsegmentStartsWithSAP="1">
    <Role    schemeIdUri="urn:mpeg:dash:role:2011"    value="main"/>
    <SupplementalProperty    schemeIdUri="urn:mpeg:dash:mpfc:2022"
value="0.2,0.2,0.3,0.3"/>
    <Representation    mimeType="video/mp4"    codecs="avc1.42c033"
width="1920"  height="1080"  bandwidth="1055223"  startWithSAP="1">
      <BaseURL>                            region2.mp4</BaseURL>
      <SegmentBase indexRangeExact="true" indexRange="839-990"/>
    </Representation>
  </AdaptationSet>

  <!--    MPFC    1    -    PRVAs    at    0.1,0.1    and    at    0.3,0.3    -->
  <AdaptationSet segmentAlignment="true" subsegmentAlignment="true"
subsegmentStartsWithSAP="1">
    <Role    schemeIdUri="urn:mpeg:dash:role:2011"    value="main"/>
    <SupplementalProperty    schemeIdUri="urn:mpeg:dash:mpfc:2022"
value="0.1,0.1,0.3,0.3"/>

    <Representation    mimeType="video/mp4"    codecs="avc1.42c033"
width="1920"  height="1080"  bandwidth="1055223"  startWithSAP="1">
      <BaseURL>                            region3.mp4</BaseURL>
      <SegmentBase indexRangeExact="true" indexRange="839-990"/>
    </Representation>
  </AdaptationSet>

  </Period>
</MPD>
```

$602_1$ $604_1$ $602_2$ $604_2$ $602_3$ $604_3$

**FIG. 6**

```
<?xml                    version="1.0"                    encoding="UTF-8"?>
<MPD
  xmlns="urn:mpeg:dash:schema:mpd:2011"
  type="static"
  mediaPresentationDuration="PT10S"
  minBufferTime="PT1S"
  profiles="urn:mpeg:dash:profile:isoff-on-demand:2011">

  <Period>
    <!—First              Playback              period              -->
    <AdaptationSet    id="first_position"    segmentAlignment="true"
subsegmentAlignment="true" subsegmentStartsWithSAP="1">
    <!— Tiled PRVA - video left part -->
    <SupplementalProperty       schemeIdUri="urn:mpeg:dash:mpfc:2022"
value="0.8,0.9"/>

      <Representation   mimeType="video/mp4"   codecs="avc1.42c01e"
width="2048"   height="2160"   bandwidth="269011"   startWithSAP="1">
        <BaseURL> PRVA_left_highres.mp4?clientId=abcd1234</BaseURL>
        <SegmentBase indexRangeExact="true" indexRange="837-988"/>
      </Representation>
    </AdaptationSet>

    <AdaptationSet    id="second_position"    segmentAlignment="true"
subsegmentAlignment="true" subsegmentStartsWithSAP="1">
    <!— Tiled PRVA - video right part -->
    <SupplementalProperty       schemeIdUri="urn:mpeg:dash:mpfc:2022"
value="0.7,0.8"/>

      <Representation   mimeType="video/mp4"   codecs="avc1.42c01e"
width="2048"   height="2160"   bandwidth="269011"   startWithSAP="1">
        <BaseURL>
right_right_highres.mp4?clientId=abcd1234</BaseURL>
        <SegmentBase indexRangeExact="true" indexRange="837-988"/>
      </Representation>
    </AdaptationSet>


</Period>
</MPD>
```

**FIG. 7**

FIG. 8

FIG. 9

**FIG. 10A**

**FIG. 10B**

**FIG. 10C**

EP 4 391 550 A1

**FIG. 11**

EP 4 391 550 A1

**FIG. 12**

Europäisches
Patentamt

European
Patent Office

Office européen
des brevets

# EUROPEAN SEARCH REPORT

Application Number

EP 23 21 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/306665 A1 (HOURUNRANTA ARI [FI] ET AL) 30 September 2021 (2021-09-30) | 1,4-15 | INV. H04N21/218 |
| Y | * paragraph [0159] – paragraph [0298] * <br> * paragraph [0371] – paragraph [0393] * <br> ----- | 2,3 | H04N19/146 <br> H04N21/2343 <br> H04N21/43 |
| X | US 2019/174150 A1 (D'ACUNTO LUCIA [NL] ET AL) 6 June 2019 (2019-06-06) | 1,4-15 | H04N21/81 <br> H04N21/845 |
| Y | * paragraph [0018] – paragraph [0028] * <br> * paragraph [0121] * <br> ----- | 2,3 | H04N19/154 <br> H04N19/167 <br> H04N19/174 |
| X | US 10 650 590 B1 (TOPIWALA PANKAJ N [US] ET AL) 12 May 2020 (2020-05-12) | 1,4-15 | H04N19/597 |
| Y | * paragraph [0155] – paragraph [0214] * <br> ----- | 2,3 | |
| A | US 2022/174332 A1 (HARVIAINEN TATU V J [FI]) 2 June 2022 (2022-06-02) <br> * Sections I, III * <br> ----- | 1-15 | |
| A | MINCHENG ZHAO ET AL: "A cloud-assisted DASH-based Scalable Interactive Multiview Video Streaming framework", <br> 2015 PICTURE CODING SYMPOSIUM (PCS), IEEE, <br> 31 May 2015 (2015-05-31), pages 221-226, <br> XP032951365, <br> DOI: 10.1109/PCS.2015.7170079 <br> * claim 1 * <br> ----- | 1-15 | |

| | |
|---|---|
| | **TECHNICAL FIELDS SEARCHED (IPC)** |
| | H04N |

The present search report has been drawn up for all claims

| Place of search | Date of completion of the search | Examiner |
|---|---|---|
| Munich | 12 April 2024 | Vaquero, Raquel |

EPO FORM 1503 03.82 (P04C01)

## ANNEX TO THE EUROPEAN SEARCH REPORT
## ON EUROPEAN PATENT APPLICATION NO.

EP 23 21 7393

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | Publication date | Patent family member(s) | | Publication date |
|---|---|---|---|---|---|
| US 2021306665 | A1 | 30-09-2021 | EP 3886439 | A1 | 29-09-2021 |
| | | | US 2021306665 | A1 | 30-09-2021 |
| US 2019174150 | A1 | 06-06-2019 | CN 109565610 | A | 02-04-2019 |
| | | | EP 3466083 | A1 | 10-04-2019 |
| | | | JP 7022077 | B2 | 17-02-2022 |
| | | | JP 2019526178 | A | 12-09-2019 |
| | | | US 2019174150 | A1 | 06-06-2019 |
| | | | WO 2017202899 | A1 | 30-11-2017 |
| US 10650590 | B1 | 12-05-2020 | NONE | | |
| US 2022174332 | A1 | 02-06-2022 | CN 113826402 | A | 21-12-2021 |
| | | | EP 3949422 | A1 | 09-02-2022 |
| | | | KR 20220004961 | A | 12-01-2022 |
| | | | US 2022174332 | A1 | 02-06-2022 |
| | | | WO 2020198164 | A1 | 01-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021130355 A

### Non-patent literature cited in the description

- Synthesis of omnidirectional movie using a set of key frame panoramic images. **LOPEZ-GULLIVER et al.** 2015 IEEE Virtual Reality (VR). IEEE, 2015, 221-222
- Novel view synthesis with multiple 360 images for large-scale 6-dof virtual reality system. **CHO et al.** 2019 IEEE Conference on Virtual Reality and 3D User Interfaces (VR). IEEE, 2019, 880-881

- Synthesis of omnidirectional movie using a set of key frame panoramic images. **LOPEZ-GULLIVER et al.** IEEE Virtual Reality (VR). IEEE, 2015, 221-222